# EUROPEAN PATENT SPECIFICATION

(11) **EP 0 548 940 B1**
(45) Date of publication and mention of the grant of the patent: **06.12.1995**
(21) Application number: 92121883.0
(22) Date of filing: 23.12.1992
(51) Int. Cl.: A01N 25/08, A01N 25/18, A01N 53/00, A01N 57/14

(54) **Insecticidal compositions**
Insektizide Zusammensetzungen
Compositions insecticides

(30) Priority: 27.12.1991 JP 346698/91
(43) Date of publication of application: 30.06.1993
(73) Proprietor: SUMITOMO CHEMICAL COMPANY LIMITED, Osaka-shi, Osaka 541 (JP)
(72) Inventor: Kato, Chuzo, Shinagawa-ku, Tokyo (JP); Tanaka, Yasuyori, Minoo-shi (JP); Matsunaga, Tadahiro, Kita-ku, Kobe-shi (JP); Abe, Yasuo, Toyonaka-shi (JP)
(74) Representative: VOSSIUS & PARTNER

(56) References cited:
- GB-A- 1 565 362
- US-A- 4 133 878
- US-A- 4 849 006
- VALKENBURG W. VAN 'Pesticide Formulations' 1973 , DEKKER M. , NEW YORK, US POLON, J.A: 'Formulation of Pesticidal Dusts, Wettable Powders and Granules', pages 143-212,
- DATABASE WPIL Week 8652, Derwent Publications Ltd., London, GB; AN 86-341880
- DATABASE WPIL Week 8508, Derwent Publications Ltd., London, GB; AN 85-046638
- CENTRAL PATENTS INDEX, BASIC ABSTRACTS JOURNAL Section Ch, Week B45, 9 January 1980 Derwent Publications Ltd., London, GB; Class C, AN 81710B/45
- The Pesticide Manual, 9th Edition; 1991; C.R.Worthing; Entry nos. 3690, 6340 and 10590.

## Description

The present invention relates to an insecticidal composition for the slow release of the insecticidal active ingredients and a method for producing it.

Hitherto, as a method of maintaining insecticidal efficacy for a long period of time, a method of using a preparation which slowly release active ingredients is known. On the other hand, Japanese Patent Application Kokai No. 2-202575 discloses a method of using slow-release compositions obtained by further incorporating volatile substances and the like into complexes in which an organic ammonium ion is intercalated into a layered clay mineral which has cation exchange capacity.

This method disclosed in the above Japanese Patent Application may have no problems about slow release of perfumes and the like. However, the active ingredients of insecticides do not often keep stable in said slow-release compositions, so that this method is not always a satisfactory method for the slow release of insecticidal active ingredients.

US-A 4,849,006 discloses a controlled release composition comprising a pesticidal active ingredient and a clay mineral organic ammonium complex.

Pesticide Formulations, 1973, W. van Valkenburg, pages 143-212, describes formulations of pesticidal dusts, wettable powders and granules. It discloses that the organophosphorous insectide malathion is subject to alkaline hydrolysis and that this could be affected by basic sites on the surface of clay. Weak organic acids are proposed as inhibitors to this degradation reaction.

US-A 4,133,878 discloses stabilized compositions of organophosphorous insecticides on clay carriers whereby a mixture of propylene glycol and acetic acid is a preferred stabilizer.

The Pesticide Manual, 9th edition, 1991, C.R. Worthing, Entry numbers 3690, 6340 and 10590 discloses that pyrethroid insecticides are more stable in acid than in alkaline media, the optimum stability being at a pH of about 4.

It is the object of the present invention to provide insecticidal compositions which can be used for slow release of the insecticidal active ingredients which are stable.

It has been found that an insecticidal composition (referred to hereinafter as the present composition) obtainable by mixing a clay mineral described in (a) below, one or more active ingredients selected from the group described in (b) below and an acid described in (c) below provides an excellent insecticidal composition which can be used for the slow release of insecticidal active ingredients:
(a) a clay mineral (referred to hereinafter as mineral-organic ammonium complex) having an interlayered crystal structure into which one or two kinds of organic ammonium ions represented by the formula (I) have been intercalated, 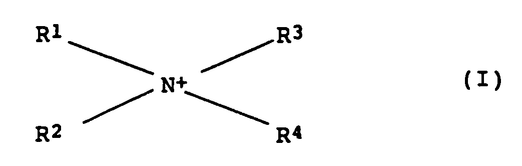 wherein each of R¹, R², R³ and R⁴, which may be the same or different, represents a hydrogen atom, a C₁-C₂₀ alkyl group, a phenyl group which may be substituted with a lower (e.g. C₁-C₆) alkyl group or a halogen atom, or a benzyl group which may be substituted with a lower (e.g. C₁-C₆) alkyl group or a halogen atom;
(b) a group consisting of
   α-cyano-3-phenoxybenzyl chrysanthemate,
   1-ethynyl-2-methylpent-2-enyl chrysanthemate,
   3-phenoxybenzyl chrysanthemate,
   2-methyl-4-oxo-3-(2-propynyl)cyclopent-2-enyl chrysanthemate,
   2-methyl-4-oxo-3-(2-propenyl)cyclopent-2-enyl chrysanthemate,
   3-phenoxybenzyl 3-(2,2-dichlorovinyl)-2,2-dimethylcyclopropanecarboxylate,
   3,4,5,6-tetrahydrophthalimidomethyl chrysanthemate,
   α-cyano-4-fluoro-3-phenoxybenzyl 3-(2,2-dichlorovinyl)-2,2-dimethylcyclopropanecarboxylate (common name, cyfluthrin),
   2,3,5,6-tetrafluorobenzyl 3-(2,2-dichlorovinyl)-2,2-dimethylcyclopropanecarboxylate,
   α-cyano-3-phenoxybenzyl 3-(2,2-dibromovinyl)-2,2-dimethylcyclopropanecarboxylate,
   2,4-dioxo-1-(2-propynyl)imidazolidin-3-ylmethyl chrysanthemate,
   5-propargyl-2-furylmethyl 2,2,3,3-tetramethylcyclopropanecarboxylate,
   α-cyano-3-phenoxybenzyl 3-(2,2-dichlorovinyl)-2,2-dimethylcyclopropanecarboxylate (common name, cypermethrin),
   α-cyano-3-phenoxybenzyl 2,2,3,3-tetramethylcyclopropanecarboxylate (common name, fenpropathrin),
   5-benzyl-3-furylmethyl chrysanthemate (common name, resmethrin),
   α-cyano-3-phenoxybenzyl 2-(4-chlorophenyl)-3-methylbutyrate (common name, fenvalerate),
   natural pyrethrins,
   O,O-dimethyl O-(3-methyl-4-nitrophenyl) phosphorothioate (common name, fenitrothion),
   O-(2-diethylamino-6-methyl-4-pyrimidinyl) O,O-dimethyl phosphorothioate (common name, pyrimiphosmethyl),
   O-(3,5,6-trichloro-2-pyridyl) O,O-diethyl phosphorothioate (common name, chloropyrifos),
   O-(3,5,6-trichloro-2-pyridyl) O,O-dimethyl phosphorothioate (common name, methyl chloropyrifos),
   O-(2,2-dichlorovinyl) O,O-dimethyl phosphate (common name, DDVP),
   S-[1,2-bis(ethoxycarbonyl)ethyl] O,O-dimethyl phosphorodithoate (common name, malathion),
   O-isopropoxyphenyl N-methylcarbamate (common name, propoxur),
   O-(sec-butyl)phenyl N-methylcarbamate (common name, BPMC),
(c) an acid having pKa of 1-9.5 at 25°C (pKa means the negative logarithm of the acidic dissociation constant in water-diluted solution).

Another object of the present invention is to provide a method for producing the above insecticidal composition. A further object of the present invention is to provide a method of controlling insect pests in the household and in the field of public hygiene and agriculture by using the above insecticidal composition. Other objects and advantages of the present invention will become apparent from the following description.

The clay mineral having an interlayered crystal structure used in the present invention is usually selected from the group consisting of smectite, kaolin ,muscovite, vermiculite, phlogopite, xanthophyllite and chrysotile.

The smectite group includes for example, montmorillonite, beidellite, nontronite, saponite, hectorite, sauconite and the like. The kaolin group includes for example, kaolinite, deckite, nacrite, antigorite and the like.

The organic ammonium ion of the formula (I) in the present composition is preferably such one that at least one of R¹, R², R³ and R⁴ is a phenyl or benzyl group which may be substituted with a lower (e.g. C₁-C₆) alkyl group or a halogen atom, and that the other groups, which may be the same or different, represent a C₁-C₂₀ alkyl group. There are more preferably used such one that at least one of R¹, R², R³ and R⁴ is a phenyl or benzyl group and the other groups, which may be the same or different, represent a methyl or ethyl group. The active ingredient used in the present invention may be an optically active compound. The optically active compound includes for example the following:
α-cyano-3-phenoxybenzyl (1R)-cis,trans-chrysanthemate (common name, cyphenothrin),
1-ethynyl-2-methyl-2-pentenyl (1R)-cis,trans-chrysanthemate (common name, empenthrin),
3-phenoxybenzyl (1R)-cis,trans-chrysanthemate (common name, d-phenothrin),
(S)-2-methyl-4-oxo-3-(2-propynyl)cyclopent-2-enyl (1R)-cis,trans-chrysanthemate (common name, prallethrin),
2-methyl-4-oxo-3-(2-propenyl)cyclopent-2-enyl (1R)-cis,trans-chrysanthemate (common name, d-allethrin),
3,4,5,6-tetrahydrophthalimidomethyl (1R)-cis,trans-chrysanthemate (common name, d-tetramethrin),
(S)-α-cyano-3-phenoxybenzyl (1R)-cis-3-(2,2-dibromovinyl)-2,2-dimethylcyclopropanecarboxylate (common name, deltamethrin) and
2,4-dioxo-1-(2-propynyl)imidazolidin-3-ylmethyl (1R)-trans-chrysanthemate.

The acid used in the present invention is one having pKa of 1-9.5 at 25°C. The definition of the pKa and pKa value of some compounds are described in, for example, "KAGAKUBINRAN (Handbook of Chemistry) KISO-HEN II, third revised edition, p. 337-342 [edited by Chemical Society of Japan, published by Maruzen Co., Ltd. (1984)].

The acid used in the present invention may be any organic acid or inorganic acid, and includes for example, the following:
C₁-C₁₈ aliphatic monocarboxylic acids which may be substituted with a hydroxyl or C₁-C₆ alkyl group or a halogen atom,
C₂-C₂₀ aliphatic dicarboxylic acids which may be substituted with a hydroxyl or C₁-C₆ alkyl group or a halogen atom,
C₄-C₁₀ aliphatic tricarboxylic acids which may be substituted with a hydroxyl or C₁-C₆ alkyl group or a halogen atom,
aromatic compounds having one to three carboxylic groups which may be substituted with a hydroxyl or C₁-C₆ alkyl group or a halogen atom,
heterocyclic compounds (e.g. pyridine, furane, pyrrole, thiophene, pyrazole, imidazole, pyrimidine, pyridazine) having one to three carboxylic groups which may be substituted with a hydroxyl or C₁-C₆ alkyl group or a halogen atom,
boric acid and compounds having a phosphate, phosphite or hypophosphite group.

Among them, the C₂-C₂₀ aliphatic dicarboxylic acids and benzoic acid and phthalic acid of which the bezene ring may be substituted with a hydroxyl or C₁-C₆ alkyl group or a halogen atom, are preferable.

The acid used in the present invention includes for example, maleic acid, benzoic acid, salicylic acid, boric acid, azelaic acid, nicotinic acid, adipic acid, isonicotinic acid, oxaloacetic acid, citric acid, glutamic acid, succinic acid, acetic acid, oxalic acid, tartaric acid, stearic acid, lactic acid, palmitic acid, pimelic acid, pyruvic acid, phthalic acid, fumaric acid, malonic acid, mandelic acid, malic acid, levulinic acid, phosphoric acid, phosphorous acid and hypophosphorous acid.

The present composition can be used alone as the slow-release composition, but if necessary, a carrier may further be added to extend the composition.

Any inorganic carriers and organic ones may be used as the carrier. The inorganic carrier includes for example, kaolinite, diatomaceous earth, talc, clay, perlite, kaolin, bentonite, alumina and silica. The organic carrier includes for example, resins, pulps and fibers. These carriers may be used alone or in combination.

In the present invention, as a method of intercalating the organic ammonium ion of the formula (I) into the interlayered crystal structure of the clay minerals having an interlayered crystal structure, the method disclosed in US Patent No. 2,531,427 can be used. However, commercially available mineral-organic ammonium complexes, for example, S-BEN 74 (montmorillonite-organic ammonium complex produced by HOJUN YOKO Co., Ltd.) may be used.

In the present composition, each proportion of the mineral-organic ammonium complex (a), the insecticidal active ingredient (b) and the acid (c) is usually (a) 99.9 to 60, (b) 0.1 to 26.0 and (c) 0.01 to 26.0, % by weight based on the weight of the total composition. However, the amount of the acid (c) added is preferably 0.1 to 5 parts by weight, more preferably 0.5 to 2 parts by weight per part by weight of the insecticidal active ingredient (b) added. The amount of the insecticidal active ingredient (b) added is usually 0.001 to 0.5 mole, preferably 0.005 to 0.1 mole based on 100 g of the mineral-organic ammonium complex (a).

For producing the present composition, for example the following three methods are given.

### Method 1:

A predetermined amount of the mineral-organic ammonium complex is added to an organic solvent solution containing a predetermined amount of the insecticidal active ingredient. The mixture is stirred at 10°C to 30°C for 10 minutes to 24 hours, preferably 1 hour or more. After stirring, the mixture is filtered and the separated precipitate is air-dried for 18 hours or more. After the precipitate thoroughly solidifies, it is pulverized into a powder. To this powder a predetermined amount of the acid is added, and if necessary, an extender carrier is added. The mixture is well kneaded to obtain the present composition. In this method, the organic solvent, for example includes toluene, xylene, benzene, ethyl acetate, hexane, acetone, methanol and dichloromethane.

### Method 2:

The same procedure as in Method 1 is repeated except that in place of stirring at 10°C to 30°C for 10 minutes to 24 hours, stirring is carried out at 10°C to 30°C for 10 minutes to 1 hour, and after adding an extender carrier, it is continued at the same temperature for further 10 minutes to 24 hours.

### Method 3:

A predetermined amount of the insecticidal active ingredient is added to a predetermined amount of the mineral-organic ammonium complex, and the mixture is well kneaded. Thereafter, a predetermined amount of the acid is added, the mixture is well kneaded, and after an extender carrier is added if necessary, kneading is further continued to obtain the present composition.

The mineral-organic ammonium complex used in the above three methods can be obtained by adding a predetermined amount of an organic ammonium halogen salt to a predetermined amount of the clay mineral having an interlayered crystal structure.

In the household and in the field of public hygiene and in agriculture, the present composition thus obtained is directly applied in the form of a powder, or applied in the form of a granule, a tablet or the like after formulating the powder into these preparations.

The present composition, when added to an organic solvent, swells and uniformly diffuses in the solvent, so that it can also be used mixed with paints. In resin processing, resins having an insecticidal effect can be produced by adding the present composition. Further, since the active ingredient of the present composition is intercalated into the interlayered structure of the clay minerals, the amount of the active ingredient which diffuses in vapor becomes small. Consequently, the present composition can be utilized in the form of a poison bait formulation even when produced with an active ingredient having an insect-repelling effect according to the method of the present invention.

Insect pests which can be exterminated with the present composition include agricultural pests, pests for stored crop pests which are a general nuisance, clothes pests, hygiene pests , acarine pests and the like. The agriculture pests include Fulgoroidae, Deltocephalidae, Aphidoidea, Pyraloidae, Copromorphoidea, Coccoidea, Noctuidae and the like. The stored crop pests include Rhynchophoridae, Psocomorpha, Trogossitidae, Anobiidae and the like. The pests which are a general nuisance include Psychodoidea, Chironomidae, Hymenoptera, Diplopoda, Heteroptera, Chilopoda and the like. The clothes pests include Tineidae, Dermestoidea and the like. The hygiene pests include Siphonaptera, Nematocera, Diptera, Blattaria and the like. The acarine pests include Parasitidae and Macronyssidae belonging to Mesostigmata, Cheyletidae and Tarsonemidae belonging to Prostigmata and Epidermoptidae and Acaridae belonging to Astigmata.

The present invention will be illustrated in more detail with reference to the following examples, but it is not to be interpreted as being limited thereto. In the examples, all percents and parts mean wt.% and part by weight, respectively.

A quantitative analysis of the active ingredient contained in the present compositions and comparative compositions was conducted by the following method.

100 Milligrams of the composition was weighed, and an acetone solution of the internal standard compound was added thereto to make the total volume about 8 ml. The mixed solution was irradiated with ultrasonic waves room temperature for 60 minutes.

Subsequently, the mixed solution was allowed to stand at room temperature for 1 hour or more to precipitate the clay mineral. The supernatant was sampled and if necessary filtered through a cotton plug to obtain an acetone solution of the sample. This acetone solution was supplied to a gas chromatograph and analysed by the internal standard analytical method.

### Analytical condition for cyphenothrin:

Shimadzu gas chromatograph: GC7A
Detector: FID
Column: 5% OV-101, 100 to 120 mesh, Uniport HP (carrier)
Temperature (column): 230°C
Temperature (injection room): 280°C
Carrier gas: He 50 ml/min, H₂ 0.5 kg/cm², Air 0.5 kg/cm²
Internal standard compound: benzyl n-butyl phthalate

### Analytical condition for prallethrin:

Shimadzu gas chromatograph: GC7A
Detector: FID
Column: 2% diethylene glycol succinate

### Uniport HP 60 to 80 mesh

Temperature (column): 190°C
Temperature (injection room): 250°C
Carrier gas: He 50 ml/min, H₂ 0.5 kg/cm², Air 0.5 kg/cm²
Internal standard compound: d-allethrin

### Production Example 1

5.33 Grams of S-BEN 74 was added to 200 g of a 1% toluene solution of cyphenothrin, and the mixture was stirred at 25°C for 6 hours. After filtration, the separated precipitate was air-dried for 18 hours, and the solidified product was pulverized. To the resulting powder was added 0.27 g of salicylic acid, and the mixture was thoroughly kneaded to obtain the present composition 1.

### Production Example 2

The same procedure was repeated as in Production Example 1 except that 0.27 g of benzoic acid was used in place of 0.27 g of salicylic acid, to obtain the present composition 2.

### Production Example 3

The same procedure was repeated as in Production Example 1 except that 0.27 g of maleic acid was used in place of 0.27 g of salicylic acid, to obtain the present composition 3.

### Production Example 4

The same procedure was repeated as in production Example 1 except that 0.27 g of boric acid was used in place of 0.27 g of salicylic acid, to obtain the present composition 4.

### Comparative Production Example 1

5.33 Grams of S-BEN 74 was added to 200 g of a 1% toluene solution of cyphenothrin, and the mixture was stirred at 25°C for 6 hours. After filtration, the separated precipitate was air-dried for 18 hours, and the solidified product was pulverized to obtain comparative composition A.

### Production Example 5

1.50 Grams of prallethrin was slowly added to 28.50 g of S-BEN 74 while thoroughly kneading the latter, and the mixture was thoroughly kneaded and then air-dried for 1 hour. Thereafter, 0.10 g of salicylic acid was added to 2.0 g of the powder, and the mixture was kneaded to obtain the present composition 5.

### Production Example 6

The same procedure was repeated as in Production Example 5 except that 0.20 g of salicylic acid was used as the acid in place of 0.10 g of salicylic acid, to obtain the present composition 6.

### Production Example 7

The same procedure was repeated as in Production Example 5 except that 0.10 g of maleic acid was used as the acid in place of 0.10 g of salicylic acid, to obtain the present composition 7.

### Production Example 8

The same procedure was repeated as in Production Example 5 except that 0.20 g of maleic acid was used as the acid in place of 0.10 g of salicylic acid, to obtain the present composition 8.

### Production Example 9

The same procedure was repeated as in Production Example 5 except that 0.10 g of boric acid was used as the acid in place of 0.10 g of salicylic acid, to obtain the present composition 9.

### Production Example 10

The same procedure was repeated as in Production Example 5 except that 0.20 g of boric acid was used as the acid in place of 0.10 g of salicylic acid, to obtain the present composition 10.

### Comparative Production Example 2

1.50 Grams of prallethrin was slowly added to 28.50 g of S-BEN 74 while thoroughly kneading the latter, and the mixture was thoroughly kneaded and then air-dried for 1 hour, to obtain comparative composition B.

### Production Example 11

0.5 Gram of prallethrin was added to 10 g of S-BEN 74, and the mixture was thoroughly kneaded. Thereafter, 0.5 g of benzoic acid was added thereto, and the mixture was kneaded to obtain the present composition 11.

### Production Example 12

1.0 Gram of fenitrothion was added to 10 g of S-BEN 74, and the mixture was thoroughly kneaded. Thereafter, 0.5 g of benzoic acid was added thereto, and the mixture was kneaded to obtain the present composition 12.

### Production Example 13

0.45 Gram of cyphenothrin was slowly added to 9.55 g of S-BEN 74 while thoroughly kneading the latter, and the mixture was thoroughly kneaded and then air-dried for 1 hour. To 1,50 g of the resulting powder 67.5 mg of maleic acid was added, and the mixture was kneaded. Further, Shokozan Noyaku 50 (clay produced by Shokozan MINING Co., Ltd.) was added thereto until the total amount was 13.50 g, and the mixture was kneaded to obtain the present composition 13.

### Comparative Production Example 3

0.45 Gram of cyphenothrin was slowly added to 9.55 g of S-BEN 74 while thoroughly kneading the latter, and the mixture was thoroughly kneaded and then air-dried for 1 hour. To 1.50 g of the resulting powder was added 12.00 g of Shokozan Noyaku 50, and the mixture was kneaded to obtain comparative composition C.

### Production Example 14

1.50 Grams of cyphenothrin was slowly added to 28.50 g of S-BEN 74 while thoroughly kneading the latter, and the mixture was thoroughly kneaded and then air-dried for 1 hour. Thereafter, 0.10 g of azelaic acid was added to 2.0 g of the powder, and the mixture was kneaded to obtain the present composition 14.

### Production Example 15

The same procedure was repeated as in Production Example 14 except that 0.10 g of phosphoric acid was used as the acid in place of 0.10 g of azelaic acid, to obtain the present composition 15.

### Production Example 16

The same procedure was repeated as in Production Example 14 except that 0.10 g of nicotinic acid was used as an acid in place of 0.10 g of azelaic acid, to obtain the present composition 16.

### Comparative Production Example 4

The same procedure was repeated as in Production Example 14 except that 0.10 g of nitric acid 70% solution in water was used as the acid in place of 0.10 g of azelaic acid, to obtain comparative composition D.

### Comparative Production Example 5

The same procedure was repeated as in Production Example 14 except that 0.10 g of phenol was used as the acid in place of 0.10 g of azelaic acid, to obtain comparative composition E.

### Comparative Production Example 6

1.50 Grams of cyphenothrin was slowly added to 28.5 g of S-BEN 74 while thoroughly kneading the latter. The mixture was thoroughly kneaded and then air-dried for 1 hr, to obtain comparative composition F.

### Formulation Example

Ten parts of the present composition 12 containing about 5% of fenitrothion, 2 parts of an sesame oil, 20 parts of raw sugar, 1.5 parts of a krill powder, 5 parts of water and 61.5 parts of dextrin were mixed and kneaded. A pressure of 825 kg/cm² was applied to 4.0 g of the kneaded product to obtain a poison bait formulation having a tablet form.

### Test Example 1

The test composition of which the amount of the active ingredient was previously determined by gas chromatography was put in an aluminum-laminated polyethylene bag which was then sealed airtight. After the test composition was stored at a predetermined temperature for a perdetermined period of time, the amount of the active ingredient contained in the test composition was determined by gas chromatography.

The results are shown in Tables 1, 2 and 3. In the Tables, the Composition No. corresponds to the number of the present compositions in the Production Examples and the symbols of the comparative compositions of the Comparative Production Example. Residual rate shows the ratio of contents of the active ingredient after and before storage.

**Table 1**

| Composition No. | Kind and amount (%) of acid (pKa value) | Initial content of cyphenothrin (%) | Residual rate of cyphenothrin (%): after 14 days at 60°C |
|---|---|---|---|
| 1 | Salicylic acid 4.8 (2.81) | 3.1 | 100 |
| 2 | Benzoic acid 4.8 (4.20) | 3.1 | 90.4 |
| 3 | Maleic acid 4.8 (1.75) | 3.1 | 100 |
| 4 | Boric acid 4.8 (9.24) | 3.1 | 100 |
| A | - | 3.3 | 38.0 |

**Table 2**

| Composition No. | Kind and amount (%) of acid (pKa value) | Initial content of prallethrin (%) | Residual rate of prallethrin (%) | |
|---|---|---|---|---|
| | | | After 7 days at 60°C | After 14 days at 60°C |
| 5 | Salicylic acid 2.4 | 4.9 | 98.5 | 96.8 |
| 6 | Salicylic acid 4.8 (2.81) | 4.7 | 100.0 | 99.1 |
| 7 | Maleic acid 2.4 | 4.9 | 94.2 | 92.8 |
| 8 | Maleic acid 4.8 (1.75) | 4.7 | 98.1 | 95.6 |
| 9 | Boric acid 2.4 | 4.9 | 92.6 | 88.0 |
| 10 | Boric acid 4.8 (9.24) | 4.7 | 98.8 | 97.7 |
| B | - | 5.0 | 53.7 | 33.4 |

**Table 3**

| Composition No. | Kind and amount (%) of acid (pKa value) | Initial content of cyphenothrin (%) | Residual rate of cyphenothrin (%): after 7 days at 40°C |
|---|---|---|---|
| 14 | Azelaic acid 4.8 (4.39) | 4.8 | 94.5 |
| 15 | Phosphoric acid 4.8 (2.15) | 4.8 | 100 |
| 16 | Nicotinic acid 4.8 (2.05) | 4.8 | 99.6 |
| D | Nitric acid 4.8 (-1.4) | 4.8 | 0 |
| E | Phenol 4.8 (9.86) | 4.8 | 55.6 |
| F | ― | 5.0 | 58.0 |

### Text Example 2

2.25 Grams of the test composition was uniformly spread over a glass disc of 18 cm in diameter and stored in a constant-temperature vessel kept at 40°C without covering the disc . After one week, the disc was taken out, and two lots, 90 mg and 45 mg in weight, of the test composition powder were weighed, and uniformly spread over the respective decorative laminates of 15 cm square in area. A cylindrical plastic of 18 cm in diameter and 5 cm in height (coated with butter at the inner surface to prevent cockroaches from running away) was put on each decorative laminate. Ten German cockroaches (Blattella germanica) (five females and five males) were put into the cylindrical plastic and forced to come into contact with the test composition powder for 2 hours. Thereafter, the number of knocked-down insects was counted. The above operation was repeated three times. The KT₅₀ value, a time required for 50% of the test insects to be knocked down, was obtained from the knock-down ratio against the elapsed time according to Finney's diagrammatic method. Further, the test insects were recovered in a cup containing water and bait, and the mortality was examined after three days. The results are shown in Table 4.

**Table 4**

| Composition No. | Amount of test composition powder weighed (mg) | Amount of maleic acid added (%) | KT₅₀ value (min) | Mortality (%) |
|---|---|---|---|---|
| 13 | 90 | 0.50 | 12.8 | 93.3 |
| 13 | 45 | 0.50 | 17.9 | 76.7 |
| C | 90 | - | 15.4 | 73.3 |
| C | 45 | - | 44.2 | 40.0 |

By using the insecticidal composition of the present invention, it is possible to slowly release the active ingredient while avoiding its decomposition. The present invention provides a slow-release insecticidal composition of high usefulness and practicability.

## Claims

1. An insecticidal composition obtainable by mixing a clay mineral described in (a) below, one or more active ingredients selected from the group described in (b) below and an acid described in (c) below:
(a) a clay mineral (referred to hereinafter as mineral-organic ammonium complex) having an interlayered crystal structure into which one or two kinds of organic ammonium ions represented by the formula (I) have been intercalated, 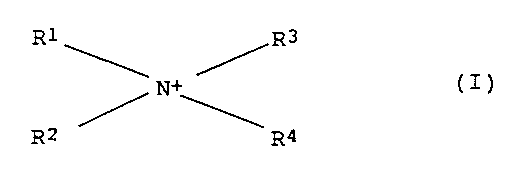 wherein each of R¹, R², R³ and R⁴, which may be the same or different, represents a hydrogen atom, a C₁-C₂₀ alkyl group, a phenyl group which may be substituted with a C₁-C₆ alkyl group or a halogen atom, or a benzyl group which may be substituted with a C₁-C₆ alkyl group or a halogen atom;
(b) a group consisting of
α-cyano-3-phenoxybenzyl chrysanthemate,
1-ethynyl-2-methylpent-2-enyl chrysanthemate,
3-phenoxybenzyl chrysanthemate,
2-methyl-4-oxo-3-(2-propynyl)cyclopent-2-enyl chrysanthemate,
2-methyl-4-oxo-3-(2-propenyl)cyclopent-2-enyl chrysanthemate,
3-phenoxybenzyl 3-(2,2-dichlorovinyl)-2,2-dimethylcyclopropanecarboxylate,
3,4,5,6-tetrahydrophthalimidomethyl chrysanthemate,
α-cyano-4-fluoro-3-phenoxybenzyl 3-(2,2-dichlorovinyl)-2,2-dimethylcyclopropanecarboxylate,
2,3,5,6-tetrafluorobenzyl 3-(2,2-dichlorovinyl)-2,2-dimethylcyclopropanecarboxylate,
α-cyano-3-phenoxybenzyl 3-(2,2-dibromovinyl)-2,2-dimethylcyclopropanecarboxylate,
2,4-dioxo-1-(2-propynyl)imidazolidin-3-ylmethyl chrysanthemate,
5-propargyl-2-furylmethyl 2,2,3,3-tetramethylcyclopropanecarboxylate,
α-cyano-3-phenoxybenzyl 3-(2,2-dichlorovinyl)-2,2-dimethylcyclopropanecarboxylate,
α-cyano-3-phenoxybenzyl 2,2,3,3-tetramethylcyclopropanecarboxylate,
5-benzyl-3-furylmethyl chrysanthemate,
α-cyano-3-phenoxybenzyl 2-(4-chlorophenyl)-3-methylbutyrate,
natural pyrethrins,
O,O-dimethyl O-(3-methyl-4-nitrophenyl) phosphorothioate,
O-(2-diethylamino-6-methyl-4-pyrimidinyl) O,O-dimethyl phosphorothioate,
O-(3,5,6-trichloro-2-pyridyl) O,O-diethyl phosphorothioate,
O-(3,5,6-trichloro-2-pyridyl) O,O-dimethyl phosphorothioate,
O-(2,2-dichlorovinyl) O,O-dimethyl phosphate
S-[1,2-bis(ethoxycarbonyl)ethyl] O,O-dimethyl phosphorodithioate,
O-isopropoxyphenyl N-methylcarbamate,
O-(sec-butyl)phenyl N-methylcarbamate,
(c) an acid having pKa of 1-9.5 at 25°C.

2. The insecticidal composition according to Claim 1, wherein the contents of the components (a), (b) and (c) are (a) 99.9 to 60, (b) 0.1 to 26.0 and (c) 0.01 to 26.0, % by weight based on the weight of the total composition.

3. The insecticidal composition according to Claim 1, wherein the amount of the acid (c) added is 0.1 to 5 parts by weight per part by weight of the insecticidal active ingredient (b) added.

4. The insecticidal composition according to Claim 1, wherein the amount of the acid (c) added is 0.5 to 2 parts by weight per part by weight of the insecticidal active ingredient (b) added.

5. The insecticidal composition according to Claim 1, wherein the amount of the insecticidal active ingredient (b) added is 0.001 to 0.5 mole based on 100 g of the mineral-organic ammonium complex (a) added.

6. The insecticidal composition according to Claim 1, wherein the amount of the insecticidal active ingredient (b) added is 0.005 to 0.1 mole based on 100 g of the mineral-organic ammonium complex (a) added.

7. The insecticidal composition according to Claim 1, wherein the acid (c) is one selected from the group consisting of:
C₁-C₁₈ aliphatic monocarboxylic acids which may be substituted with a hydroxyl or C₁-C₆ alkyl group or a halogen atom,
C₂-C₂₀ aliphatic dicarboxylic acids which may be substituted with a hydroxyl or C₁-C₆ alkyl group or a halogen atom,
C₄-C₁₀ aliphatic tricarboxylic acids which may be substituted with a hydroxyl or C₁-C₆ alkyl group or a halogen atom,
aromatic compounds having one to three carboxylic groups which may be substituted with a hydroxyl or C₁-C₆ alkyl group or a halogen atom,
heterocyclic compounds having one to three carboxylic groups which may be substituted with a hydroxyl or C₁-C₆ alkyl group or a halogen atom,
boric acid and
compounds having a phosphate, phosphite or hypophosphite group.

8. The insecticidal composition according to Claim 1, wherein the acid (c) is one selected from the group consisting of the C₂-C₂₀ aliphatic dicarboxylic acids, benzoic acids and phthalic acids of which the benzene ring may be substituted with a hydroxyl or C₁-C₆ alkyl group or a halogen atom.

9. The insecticidal composition according to Claim 1, wherein the acid (c) is one selected from the group consisting of maleic acid, benzoic acid, salicylic acid, boric acid, azelaic acid, nicotinic acid and phosphoric acid.

10. The insecticidal composition according to Claim 1, wherein the active ingredient (b) is one or more members selected from the group consisting of:
α-cyano-3-phenoxybenzyl chrysanthemate and
2-methyl-4-oxo-3-(2-propynyl)cyclopent-2-enyl chrysanthemate.

11. The insecticidal composition according to Claim 1, wherein in the organic ammonium ion of the formula (I) described in (a), at least one of R¹, R², R³ and R⁴ is a phenyl or benzyl group which may be substituted with a C₁-C₆ alkyl group or a halogen atom, and the other groups, which may be the same or different, are C₁-C₂₀ alkyl groups.

12. The insecticidal composition according to Claim 1, wherein in the organic ammonium ion of the formula (I) described in (a), at least one of R¹, R², R³ and R⁴ is a phenyl or benzyl group, and the other groups, which may be the same or different, are a methyl or ethyl group.

13. The insecticidal composition according to Claim 1, wherein the clay mineral having an interlayered crystal structure described in (a) is selected from the group consisting of smectite, kaolin, muscovite, vermiculite, phlogopite, xanthophyllite and chrysotile.

14. The insecticidal composition according to Claim 13, wherein the smectite group is montmorillonite, beidellite, nontronite, saponite, hectorite or sauconite.

15. The insecticidal composition according to Claim 13, wherein the kaolin group is kaolinite, deckite, nacrite or antigorite.

16. The insecticidal composition according to Claim 1, wherein the mineral-organic ammonium complex is a montmorillonite-organic ammonium complex.

17. A method for producing an insecticidal composition according to Claim 1 comprising adding the mineral-organic ammonium complex (a) to an organic solvent solution containing the insecticidal active ingredient (b), stirring the mixture at 10°C to 30°C for 10 minutes to 24 hours, filtering the mixture to separate the precipitate which is then air-dried, solidified and pulverized into a powder, adding the acid (c) to the powder and thoroughly kneading the resulting mixture.

18. The method for producing an insecticidal composition according to Claim 17, wherein the organic solvent is toluene, xylene, benzene, ethyl acetate, hexane, acetone, methanol or dichloromethane.

19. A method for producing an insecticidal composition according to Claim 1 comprising adding the mineral-organic ammonium complex (a) to an organic solvent solution containing the insecticidal active ingredient (b), stirring the mixture at 10°C to 30°C for 10 minutes to 1 hour, adding a carrier, continuing stirring at 10°C to 30°C for further 10 minutes to 24 hours, filtering the mixture to separate the precipitate which is then air-dried, solidified and pulverized into a powder, adding the acid (c) to the powder and thoroughly kneading the resulting mixture.

## Patentansprüche

1. Insektizide Zusammensetzung, erhältlich durch Mischen eines nachstehend in (a) beschriebenen Tonminerals, eines oder mehrerer Wirkstoffe, ausgewählt aus der nachstehend in (b) beschriebenen Gruppe, und einer nachstehend in (c) beschriebenen Säure:
(a) ein Tonmineral (nachstehend als mineral-organischer Ammoniumkomplex bezeichnet) mit einer Zwischenschichtkristallstruktur, in die eine oder zwei Arten von organischen Ammoniumionen der Formel (I) eingelagert sind 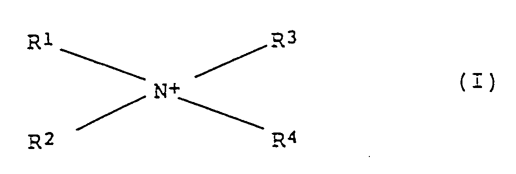 wobei jeder der Reste R¹, R², R³ und R⁴, die gleich oder verschieden sein können, ein Wasserstoffatom, einen C₁-C₂₀-Alkylrest, eine Phenylgruppe, die mit einem C₁-C₆-Alkylrest oder einem Halogenatom substituiert sein kann, oder eine Benzylgruppe, die mit einem C₁-C₆-Alkylrest oder einem Halogenatom substituiert sein kann, darstellt,
(b) eine Gruppe, bestehend aus
Chrysanthemsäure-α-cyano-3-phenoxybenzylester,
Chrysanthemsäure-1-ethinyl-2-methylpent-2-enylester,
Chrysanthemsäure-3-phenoxybenzylester,
Chrysanthemsäure-2-methyl-4-oxo-3-(2-propinyl)cyclopent-2-enylester,
Chrysanthemsäure-2-methyl-4-oxo-3-(2-propenyl)cyclopent-2-enylester,
3-(2,2-Dichlorvinyl)-2,2-dimethylcyclopropancarbonsäure-3-phenoxybenzylester,
Chrysanthemsäure-3,4,5,6-tetrahydrophthalimidomethylester,
3-(2,2-Dichlorvinyl)-2,2-dimethylcyclopropancarborsäure-α-cyano-4-fluor-3-phenoxybenzylester,
3-(2,2-Dichlorvinyl)-2,2-dimethylcyclopropancarbonsäure-2,3,5,6-tetrafluorbenzylester,
3-(2,2-Dibromvinyl)-2,2-dimethylcyclopropancarbonsäure-α-cyano-3-phenoxybenzylester,
Chrysanthemsäure-2,4-dioxo-1-(2-propinyl)imidazolidin-3-ylmethylester,
2,2,3,3-Tetramethylcyclopropancarbonsäure-5-propargyl-2-furylmethylester,
3-(2,2-Dichlorvinyl)-2,2-dimethylcyclopropancarbonsäure-α-cyano-3-phenoxybenzylester,
2,2,3,3-Tetramethylcyclopropancarbonsäure-α-cyano-3-phenoxybenzylester,
Chrysanthemsäure-5-benzyl-3-furylmethylester,
2-(4-Chlorphenyl)-3-methylbuttersäure-α-cyano-3-phenoxybenzylester, natürlichen Pyrethrinen,
O,O-Dimethyl-O-(3-methyl-4-nitrophenyl)thiophosphat,
O-(2-Diethylamino-6-methyl-4-pyrimidinyl)-O,O-dimethylthiophosphat,
O-(3,5,6-Trichlor-2-pyridyl)-O,O-diethylthiophosphat,
O-(3,5,6-Trichlor-2-pyridyl)-O,O-dimethylthiophosphat,
O-(2,2-Dichlorvinyl)-O,O-dimethylphosphat,
S-[1,2-Bis(ethoxycarbonyl)ethyl]-O,O-dimethyldithiophosphat,
O-Isopropoxyphenyl-N-methylcarbamat,
O-(sek-Butyl)phenyl-N-methylcarbamat,
(c) einer Säure mit einem pKa-Wert bei 25°C von 1 - 9.5.

2. Insektizide Zusammensetzung nach Anspruch 1, in der der Gehalt der Bestandteile (a), (b) und (c) (a) 99.9 bis 60, (b) 0.1 bis 26.0 und (c) 0.01 bis 26.0 Gew.-%, bezogen auf das Gewicht der gesamten Zusammensetzung, beträgt.

3. Insektizide Zusammensetzung nach Anspruch 1, in der die Menge an zugegebener Säure (c) 0.1 bis 5 Gew.-Teile, pro Gew.-Teil des zugegebenen insektiziden Wirkstoffs (b), beträgt.

4. Insektizide Zusammensetzung nach Anspruch 1, in der die Menge an zugegebener Säure (c) 0.5 bis 2 Gew.-Teile, pro Gew.-Teil des zugegebenen insektiziden Wirkstoffs (b), beträgt.

5. Insektizide Zusammensetzung nach Anspruch 1, in der die Menge des zugegebenen insektiziden Wirkstoffs (b) 0.001 bis 0.5 mol, bezogen auf 100 g des zugegebenen mineral-organischen Ammoniumkomplexes (a), beträgt.

6. Insektizide Zusammensetzung nach Anspruch 1, in der die Menge des zugegebenen insektiziden Wirkstoffs (b) 0.005 bis 0.1 mol, bezogen auf 100 g des zugegebenen mineral-organischen Ammoniumkomplexes (a), beträgt.

7. Insektizide Zusammensetzung nach Anspruch 1, in der die Säure (c) aus der Gruppe:
aliphatische C₁-C₁₈-Monocarbonsäuren, die mit einer Hydroxylgruppe oder einem C₁-C₆-Alkylrest oder einem Halogenatom substituiert sein können,
aliphatische C₂-C₂₀-Dicarbonsäuren, die mit einer Hydroxylgruppe oder einem C₁-C₆-Alkylrest oder einem Halogenatom substituiert sein können,
aliphatische C₄-C₁₀-Tricarbonsäuren, die mit einer Hydroxylgruppe oder einem C₁-C₆-Alkylrest oder einem Halogenatom substituiert sein können,
aromatische Verbindungen mit einer bis drei Carboxylgruppen, die mit einer Hydroxylgruppe oder einem C₁-C₆-Alkylrest oder einem Halogenatom substituiert sein können,
heterocyclische Verbindungen mit einer bis drei Carboxylgruppen, die mit einer Hydroxylgruppe oder einem C₁-C₆-Alkylrest oder einem Halogenatom substituiert sein können,
Borsäure und
Verbindungen mit einer Phosphat-, Phosphit- oder Hypophosphitgruppe,
ausgewählt ist.

8. Insektizide Zusammensetzung nach Anspruch 1, in der die Säure (c) aus aliphatischen C₂-C₂₀-Dicarbonsäuren, Benzoesäuren und Phthalsäuren ausgewählt ist, von denen der Benzolring mit einer Hydroxylgruppe oder einem C₁-C₆-Alkylrest oder einem Halogenatom substituiert sein kann.

9. Insektizide Zusammensetzung nach Anspruch 1, in der die Säure (c) aus Maleinsäure, Benzoesäure, Salicylsäure, Borsäure, Azelainsäure, Nicotinsäure und Phosphorsäure ausgewählt ist.

10. Insektizide Zusammensetzung nach Anspruch 1, in der der Wirkstoff (b) Chrysanthemsäure-α-cyano-3-phenoxybenzylester und/oder Chrysanthemsäure-2-methyl-4-oxo-3-(2-propinyl)cyclopent-2-enylester ist.

11. Insektizide Zusammensetzung nach Anspruch 1, in der in dem in (a) beschriebenen organischen Ammoniumion der Formel (I) mindestens einer der Reste R¹, R², R³ und R⁴ ein Phenyl- oder Benzylrest ist, der mit einem C₁-C₆-Alkylrest oder einem Halogenatom substituiert sein kann, und die anderen Reste, die gleich oder verschieden sein können, C₁-C₂₀-Alkylreste sind.

12. Insektizide Zusammensetzung nach Anspruch 1, in der in dem in (a) beschriebenen organischen Ammoniumion der Formel (I) mindestens einer der Reste R¹, R², R³ und R⁴ eine Phenyl- oder Benzylgruppe ist und die anderen Reste, die gleich oder verschieden sein können, Methyl- oder Ethylgruppen sind.

13. Insektizide Zusammensetzung nach Anspruch 1, in der das in (a) beschriebene Tonmineral mit einer Zwischenschicht-Kristallstruktur aus Smektit, Kaolin, Muskovit, Vermiculit, Phlogopit, Xanthophyllit und Chrysotil ausgewählt ist.

14. Insektizide Zusammensetzung nach Anspruch 13, in der die Smektit-Gruppe Montmorillonit, Beidellit, Nontronit, Saponit, Hectorit oder Sauconit ist.

15. Insektizide Zusammensetzung nach Anspruch 13, in der die Kaolin-Gruppe Kaolinit, Dickit, Nakrit oder Antigorit ist.

16. Insektzide Zusammensetzung nach Anspruch 1, in der der mineral-organische Ammoniumkomplex ein Montmorillonit-organischer Ammoniumkomplex ist.

17. Verfahren zur Herstellung einer insektiziden Zusammensetzung nach Anspruch 1, umfassend die Zugabe des mineral-organischen Ammoniumkomplexes (a) zu einer Lösung mit einem organischen Lösungsmittel, die den insektiziden Wirkstoff (b) enthält, Rühren des Gemisches für 10 Minuten bis 24 Stunden bei 10°C bis 30°C, Filtrieren des Gemisches, um den Niederschlag abzutrennen, der dann luftgetrocknet, verfestigt und zu einem Pulver pulverisiert wird, Zugabe der Säure (c) zu dem Pulver und gründliches Kneten des entstehenden Gemisches.

18. Verfahren zur Herstellung einer insektiziden Zusammensetzung nach Anspruch 17, wobei das organische Lösungsmittel Toluol, Xylol, Benzol, Essigsäureethylester, Hexan, Aceton, Methanol oder Dichlormethan ist.

19. Verfahren zur Herstellung einer insektiziden Zusammensetzung nach Anspruch 1, umfassend die Zugabe des mineral-organischen Ammoniumkomplexes (a) zu einer Lösung mit einem organischen Lösungsmittel, die den insektiziden Wirkstoff (b) enthält, Rühren des Gemisches für 10 Minuten bis 1 Stunde bei 10°C bis 30°C, Zugabe eines Trägers, Fortsetzen des Rührens für weitere 10 Minuten bis 24 Stunden bei 10°C bis 30°C, Filtrieren des Gemisches, um den Niederschlag abzutrennen, der dann luftgetrocknet, verfestigt und zu einem Pulver pulverisiert wird, Zugabe der Säure (c) zu dem Pulver und gründliches Kneten des entstandenen Gemisches.

## Revendications

1. Composition insecticide, pouvant être obtenue en mélangeant un minéral de la famille des argiles tel que décrit en (a) ci-dessous, un ou plusieurs ingrédients actifs choisis dans le groupe décrit en (b) ci-dessous et un acide tel que décrit en (c) ci-dessous:
(a) un minéral de la famille des argiles (appelé ci-après complexe minéral-ammonium organique) ayant une structure cristalline interstratifiée dans laquelle une ou deux sortes d'ions ammonium organique représentés par la formule (I) ont été intercalées 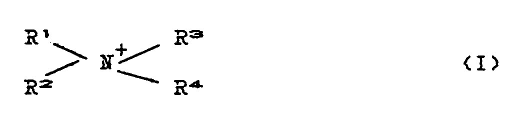 dans laquelle chacun des restes R¹, R², R³ et R⁴, qui peuvent être identiques ou différents, représente un atome d'hydrogène, un groupement alkyle en C₁-C₂₀, un groupement phényle qui peut être substitué par un groupement alkyle en C₁-C₆ ou par un atome d'halogène, ou un groupement benzyle qui peut être substitué par un groupement alkyle en C₁-C₆ ou par un atome d'halogène;
(b) un groupe constitué par
le chrysanthémate d'α-cyano-3-phénoxybenzyle,
le chrysanthémate de 1-éthynyl-2-méthylpent-2-ényle,
le chrysanthémate de 3-phénoxybenzyle,
le chrysanthémate de 2-méthyl-4-oxo-3-(2-propynyl)cyclopent-2-ényle,
le chrysanthémate de 2-méthyl-4-oxo-3-(2-propényl)cyclopent-2-ényle,
le 3-(2,2-dichlorovinyl)-2,2-diméthylcyclopropanecarboxylate de 3-phénoxybenzyle,
le chrysanthémate de 3,4,5,6-tétrahydrophtalimidométhyle,
le 3-(2,2-dichlorovinyl)-2,2-diméthylcyclopropanecarboxylate d'α-cyano-4-fluoro-3-phénoxybenzyle,
le 3-(2,2-dichlorovinyl)-2,2-diméthylcyclopropanecarboxylate de 2,3,5,6-tétrafluorobenzyle,
le 3-(2,2-dibromovinyl)-2,2-diméthylcyclopropanecarboxylate d'α-cyano-3-phénoxybenzyle,
le chrysanthémate de 2,4-dioxo-1-(2-propynyl)imidazolidine-3-ylméthyle,
le 2,2,3,3-tétraméthylcyclopropanecarboxylate de 5-propargyl-2-furylméthyle,
le 3-(2,2-dichlorovinyl)-2,2-diméthylcyclopropanecarboxylate d'α-cyano-3-phénoxybenzyle,
le 2,2,3,3-tétraméthylcyclopropanecarboxylate d'α-cyano-3-phénoxybenzyle,
le chrysanthémate de 5-benzyl-3-furylméthyle,
le 2-(4-chlorophényl)-3-méthylbutyrate d'α-cyano-3-phénoxybenzyle,
les pyréthrines naturelles,
le phosphorothioate d'O,O-diméthyle et de O-(3-méthyl-4-nitrophényle,
le phosphorothioate de O,O-diméthyle et d'O-(2-diéthylamino-6-méthyl-4-pyrimidinyle),
le phosphorothioate de O,O-diéthyle et d'O-(3,5,6-trichloro-2-pyridyle),
le phosphorothioate de O,O-diméthyle et d'O-(3,5,6-trichloro-2-pyridyle),
le phosphate de O,O-diméthyle et d'O-(2,2-dichlorovinyle),
le phosphorodithioate de O,O-diméthyle de S-[1,2-bis-(éthoxycarbonyl)éthyle],
le N-méthylcarbamate d'O-isopropoxyphényle,
le N-méthylcarbamate d'O-(sec.-butyl)phényle,
(c) un acide ayant un pKa de 1 à 9,5 à 25°C.

2. Composition insecticide selon la revendication 1, dans laquelle les teneurs des composants (a), (b) et (c) sont de 99,9 à 60% pour (a), de 0,1 à 26,0% pour (b) et de 0,01 à 26,0% pour (c), par rapport au poids de la composition totale.

3. Composition insecticide salon la revendication 1, dans laquelle la quantité de l'acide (c) utilisé est de 0,1 à 5 parties en poids par partie en poids de l'ingrédient à activité insecticide (b) utilisé.

4. Composition insecticide selon la revendication 1, dans laquelle la quantité de l'acide (c) utilisé est de 0,5 à 2 parties en poids par partie en poids de l'ingrédient à activité insecticide (b) utilisé.

5. Composition insecticide selon la revendication 1, dans laquelle la quantité de l'ingrédient à activité insecticide (b) utilisé est de 0,001 à 0,5 mole par rapport à 100 g du complexe minéral-ammonium organique (a) utilisé.

6. Composition insecticide selon la revendication 1, dans laquelle la quantité de l'ingrédient à activité insecticide (b) utilisé est de 0,005 à 0,1 mole par rapport à 100 g du complexe minéral-ammonium organique (a) utilisé.

7. Composition insecticide selon la revendication 1, dans laquelle l'acide (c) est un acide choisi dans le groupe constitué par:
les acides monocarboxyliques aliphatiques en C₁-C₁₈, qui peuvent être substitués par un groupement hydroxy ou alkyle en C₁-C₆ ou par un atome d'halogène,
les acides dicarboxyliques aliphatiques en C₂-C₂₀, qui peuvent être substitués par un groupement hydroxy ou alkyle en C₁-C₆ ou par un atome d'halogène,
les acides tricarboxyliques aliphatiques en C₄-C₁₀, qui peuvent être substitués par un groupement hydroxy ou alkyle en C₁-C₆ ou par un atome d'halogène,
des composés aromatiques renfermant un à trois groupements carboxyliques qui peuvent être substitués par un groupement hydroxy ou alkyle en C₁-C₆ ou par un atome d'halogène,
des composés hétérocycliques renfermant un à trois groupements carboxyliques qui peuvent être substitués par un groupement hydroxy ou alkyle en C₁-C₆ ou par un atome d'halogène,
l'acide borique et
des composés renfermant un groupement phosphate, phosphite ou hypophosphite.

8. Composition insecticide selon la revendication 1, dans laquelle l'acide (c) est un acide choisi dans le groupe constitué par les acides dicarboxyliques aliphatiques en C₂-C₂₀, les acides benzoïques et les acides phtaliques dont le noyau benzénique peut être substitué par un groupement hydroxy ou alkyle en C₁-C₆ ou par un atome d'halogène,

9. Composition insecticide selon la revendication 1, dans laquelle l'acide (c) est un acide choisi dans le groupe constitué par l'acide maléique, l'acide benzoïque, l'acide salicylique, l'acide borique, l'acide azélaïque, l'acide nicotinique et l'acide phosphorique.

10. Composition insecticide selon la revendication 1, dans laquelle l'ingrédient actif (b) est un ou plusieurs membres choisis dans le groupe constitué par:
le chrysanthémate d'α-cyano-3-phénoxybenzyle et
le chrysanthémate de 2-méthyl-4-oxo-3-(2-propynyl)-cyclopent-2-ényle.

11. Composition insecticide selon la revendication 1, dans laquelle, dans l'ion ammonium organique de formule (I) décrit en (a), l'un au moins des restes R¹, R², R³ et R⁴ est un groupement phényle ou benzyle qui peut être substitué par un groupement alkyle en C₁-C₆ ou par un atome d'halogène, et les autres restes, qui peuvent être identiques ou différents, sont des groupements alkyle en C₁-C₂₀.

12. Composition insecticide selon la revendication 1, dans laquelle, dans l'ion ammonium organique de formule (I) décrit en (a), l'un au moins des restes R¹, R², R³ et R⁴ est un groupement phényle ou benzyle et les autres restes, qui peuvent être identiques ou différents, sont des groupements méthyle ou éthyle.

13. Composition insecticide selon la revendication 1, dans laquelle le minéral de la famille des argiles ayant une structure cristalline interstratifiée décrit en (a) est choisi dans le groupe constitué par la smectite, le kaolin, la moscovite, la vermiculite, la phlogopite, la xanthophyllite et la chrysotile.

14. Composition insecticide selon la revendication 13, dans laquelle le groupe smectite comprend la montmorillonite, la beidellite, la nontronite, la saponite, l'hectorite et la sauconite.

15. Composition insecticide selon la revendication 13, dans laquelle le groupe kaolin comprend la kaolinite, la deckite, la nacrite et l'antigorite.

16. Composition insecticide selon la revendication 1, dans laquelle le complexe minéral-ammonium organique est un complexe montmorillonite-ammonium organique.

17. Procédé de préparation d'une composition insecticide selon la revendication 1, consistant à ajouter le complexe minéral-ammonium organique (a) à une solution contenant l'ingrédient à activité insecticide (b) dans un solvant organique, à agiter le mélange à 10-30°C pendant 10 min à 24 h, à filtrer le mélange pour séparer le précipité qui est ensuite séché à l'air, solidifié et pulvérisé en une poudre, à ajouter l'acide (c) à la poudre et à malaxer intimement le mélange.

18. Procédé de préparation d'une composition insecticide selon la revendication 17, dans lequel le solvant organique est le toluène, le xylène, le benzène, l'acétate d'éthyle, l'hexane, l'acétone, le méthanol ou le dichlorométhane.

19. Procédé de préparation d'une composition insecticide selon la revendication 1, consistant à ajouter le complexe minéral-ammonium organique (a) à une solution contenant l'ingrédient à activité insecticide (b) dans un solvant organique, à agiter le mélange à 10-30°C pendant 10 min à 1 h, à ajouter un support, à poursuivre l'agitation à 10-30°C pendant 10 min à 24 h encore, à filtrer le mélange pour séparer le précipité qui est ensuite séché à l'air, solidifié et pulvérisé en une poudre, à ajouter l'acide (c) à la poudre et à malaxer intimement le mélange.
